Europäisches Patentamt

European Patent Office

Office européen des brevets

(19)

(11) **EP 1 376 727 A2**

(12) ## EUROPEAN PATENT APPLICATION

(43) Date of publication:
**02.01.2004 Bulletin 2004/01**

(51) Int Cl.7: **H01M 8/12**

(21) Application number: **03012094.3**

(22) Date of filing: **28.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.05.2002 JP 2002156076**
**27.02.2003 JP 2003050591**

(71) Applicant: **Sanyo Electric Co., Ltd.**
**Moriguchi-shi, Osaka-fu (JP)**

(72) Inventors:
• **Taniguchi, Shunsuke**
**2-chome, Moriguchi-shi, Osaka-fu (JP)**

• **Okamoto, Takashi**
**2-chome, Moriguchi-shi, Osaka-fu (JP)**
• **Chikano, Yoshito**
**2-chome, Moriguchi-shi, Osaka-fu (JP)**
• **Takaoka, Daizo**
**2-chome, Moriguchi-shi, Osaka-fu (JP)**
• **Miyake, Yasuo**
**2-chome, Moriguchi-shi, Osaka-fu (JP)**

(74) Representative: **Glawe. Delfs. Moll**
**Patentanwälte**
**Postfach 26 01 62**
**80058 München (DE)**

(54) ## Solid oxide fuel cell

(57) Provided is a solid oxide fuel cell with long-term stability, small inside resistance and high power density which, at the same time, achieves to maintain excellent oxidation resistance, is capable of performing the process of fabricating the cell in the oxidation atmosphere at high temperatures at 1000 °C or more, and achieves reduction in the material cost. A porous metallic substrate is made of metal in which a coating containing aluminum is formed on the metal surface constituting the porous metallic substrate. Moreover, the porous metallic substrate is made of metal in which a coating, which contains aluminum and a high-conductive oxide generated by the phase reaction between elements contained in the metal constituting the substrate and elements contained in an oxidizer electrode, is formed on the metal surface constituting the poro' is metallic substrate.

Fig. 15

EP 1 376 727 A2

**Description**

**BACKGROUND OF THE INVENTION**

1. Field of the Invention

The present invention relates to a solid oxide fuel cell and, more specifically, to a solid oxide fuel cell with excellent strength and oxidation resistance, which at the same time comprises a porous metallic substrate having low contact resistance between electrodes,

2, Detailed Description of the Prior art

A solid oxide fuel cell (SOFC) has such a property that the operating temperature is high so that electricity generation with high efficiency can be achieved. Conventionally, the common type of SOFC has been the one that operates at high temperatures at about 1000 °C. Recently, however, developments have been active aiming to reduce the operating temperature (at about 500 to 700 °C) due to demands of using low-cost materials and of improvement in long-term durability including and starting/stopping of the cell.

For reducing the operating temperature of the SOFC, it is necessary to employ a so-called "supporting film cell" in which electrodes and thin film (10 to 50 µm) of electrolyte are formed on a porous substrate in order to reduce resistance caused by conduction of oxide ion in the electrolyte.

In general, the same material as that of the oxidizer electrode or the fuel electrode is used for the porous substrate of the supporting film cell. It has been common to use lanthaum-manganite based oxide, which is an oxidizer electrode material and to use nickel/zirconia cermet (NIO/YSZ), which is a fuel electrode material, and the like.

However, these materials are insufficient in terms of the mechanical strength. Specifically, the thermal shock resistance as the porous substrate is insufficient, so that the porous substrate is easily damaged by drastic change in the temperatures and the temperature gradient.

On the other hand, as a means for overcoming this shortcoming, the type of cells has been developed in which a heat-resistant metal is used for the porous substrate. For example, Patent literature 1 proposes to use NiCrAl, NiCrFe, NiCrFeAl, which form alumina as a protective coating for the substrate material. Further, Patent literature 2 proposes to use a heat-resistant alloy with low thermal expansion coefficient for the substrate material while Patent literature 3 proposes to use ferritic stainless steel for the substrate material. Especially, Patent literature 4 and Patent literature 5 propose to use sintered body of a heat-resistant alloy made of Fe-Cr-Al, which is excellent in mechanical strength and reliability.

Patent Literature 1
    Japanese Patent Laid-Open No. 1994-29024
Patent Literature 2
    Japanese Patent Laid-Open No. 1994-243879
Patent Literature 3
    Japanese Patent Laid-Open No. 1996-138690
Patent Literature 4
    Japanese Patent Laid-Open No. 1997-63605
Patent Literature 5
    Japanese Patent Laid-Open No. 2002-156076

As described, it is necessary for the porous metallic substrate to have excellent heat resistance. Therefore, it has been considered that the materials for being used are roughly classified into alloys (chromia forming alloy) in which a protective coating including chromium as the main component is formed on the surface and into alloys (alumina forming alloy) in which a protective coating including alumina as the main component is formed on the surface.

As for the chromia alloy, an oxidation film of about 10to20 µm thickness including a large amount of $Cr_2O_3$ formed on the surface functions as a protective film, thereby maintaining the oxidation resistance.

However, under the steps of sintering electrodes and an electrolyte at 1000 °C or more in the air for manufacturing a cell, oxide grows heavily on the grain surfaces which constitute the porous metallic substrate, resulting in volume expansion and deterioration in gas permeability.

Moreover, when the process for manufacturing the cells is performed in a vacuum or in the inert gas atmosphere, oxidation of the porous metallic substrate surface rapidly progresses during the operation of the cell at about 600to800 °C and the cell performance is seriously deteriorated.

Further, the electrode property may be deteriorated by evaporation of chrome oxide from the surface, which is to be diffused and mixed to the electrode. In addition, there may face an insecure stability in the long-term basis due to oxidation, carburization and the like by vapor and carbon component included in the fuel when it is used on the fuel electrode side.

On the contrary, as for the alumina forming alloy, a thin oxide film of about 2to3 μm thickness including a large amount of $Al_2O_3$ formed on the surface exhibits excellent oxidation resistance and corrosion resistance. Also, it is small in vapor pressure at high temperatures , so that it has better stability than chromia in terms of vapor. A common example of the alumina forming alloy is obtained by adding Al of about 2 wt.% to an alloy including Fe-Cr, Ni-Cr and Co-Cr as the base.

Examples of the ones which include nickel as the main component are Cabot 214 (Ni: 75.0, Fe: 2.5, Cr: 16.0, Al: 4.5, Y ; 0.01 wt. %), Nimonic 105 (Ni: 53.0, Co: 20.0, Cr: 15.0, Mo: 5.0, Al: 4.7, Ti: 1.2, C: 0.13, B : 0.005, Zr: 0.10 wt.%), Nimonic 115 (Ni: 60.0, Co ; 13.2, Cr : 14.3, Al: 4.9, Ti: 3.7, C: 0.15, B: 0.16, Zr: 0.04 wt. %) and Haynes Alloy 214 (Cr: 16, Al: 4.5 wt. %, Ni for the residual).

Examples of the stainless steel which includes iron as the main component are SUH21 (C : 0.10 or less, Si: 1.50 or less, Mn: 1.00 or less, P: 0.040 or less, S : 0.030 or less, Ni : 0.60 or less, Cr: 17.00to21.00, Al: 2.00to4.00 wt. %), 18SR (C: less than 0.05, Si : less than 1.0, Mn: less than 0.5, P: less than 0.02, S : less than 0.01, Ni : less than 0.5, Cr: 18, Al: 2, Ti: 0.4 wt.%), FCH-1 (iron chrome 1 for electric heating) (C: 0.10 or less, Si: 1.5 or less, Mn: 1.0 or less, Cr : 23to26, Al; 4to6 wt. %), FCH-2 (iron chrome 2 for electric heating) (C : 1.0 or les, Si: 1.5 or less, Mn: 1.0 or less, Cr: 17to21, Al: 2to4 wt.%), 20Cr-5Al (C: 0.15 or less, Si: 1.00 or less, Mn: 1.0 or less, P: 0.040 or less, S: 0.030 or less, Cr: 19to21, Al: 4.5to6.0, Ti: 0.10 wt.%). There are also the ones obtained by adding rare earth elements and the like to these stainless steels so as to improve the oxidation resistance and the strength at high temperatures.

If the alumina forming alloys as described can be used as the material for the porous metallic substrate, it is anticipated that a porous metallic substrate can be achieved, which can bear the oxidation atmosphere at high temperatures during the process for manufacturing the cell and, at the same time, exhibits excellent long-term stability when the cells are in operation.

Conventionally, flat-plate solid oxide fuel cells have been well known (for example, S. Taniguchi et al., Journal of Power Sources, 90, No. 2 (2000) pp. 163to169). However, while the flat-plate solid oxide fuel cell may be capable of achieving high power density, it has such a structure that the solid oxide electrolytic layer is easily damaged by the thermal stress which is caused by temperature distributions in the cell during the operation and by changes in temperatures in accordance with starting/stopping of the cell. This is an issue in regards to the durability.

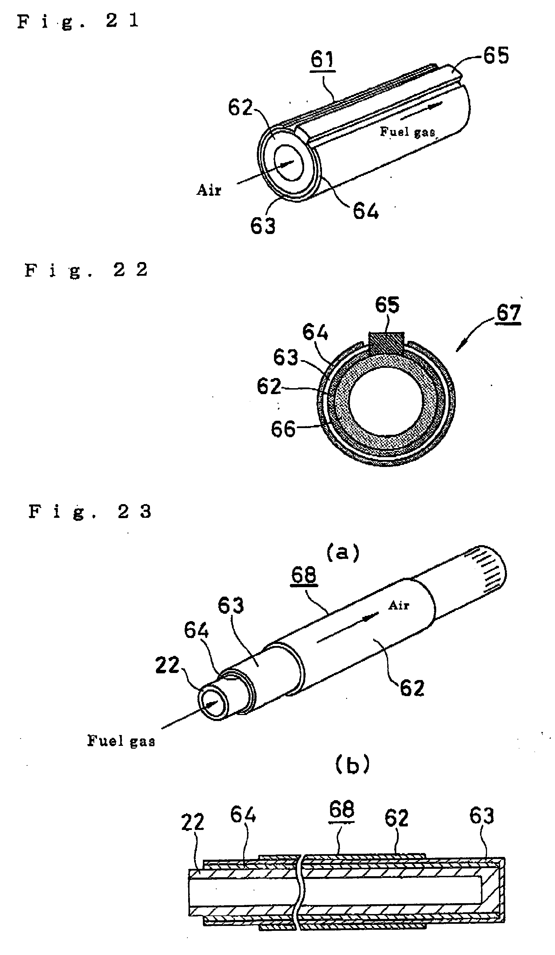

On the other hand, a cylindrical-type solid oxide fuel cell (a unit cell) as shown in Fig. 21 and Fig. 22 has been developed.

In a cylindrical-type solid oxide fuel cell 61 shown in Fig. 21, a solid oxide electrolytic layer 63 and a fuel electrode 64 are formed in circular form in order on the outer surface of a cathode tube 62 formed by a porous cylinder which also functions as an air electrode (62). In the part where the circular form is disconnected, an interconnector layer 65 which comes to be in contact with the outer surface of the air electrode 62 and stretches towards the longitudinal direction of the cylinder is formed , so that air is introduced inside the cylinder and fuel gas is introduced in the outer periphery of the cylinder. Thereby, due to electrochemical reaction, generating voltage is to be obtained between the air electrode 62 and the fuel electrode 64 and thus between the interconnector layer 65 and the fuel electrode 64.

A cylindrical-type solid oxide fuel cell 67 shown in Fig. 22 has the same structure as that of the cell 61 except that a porous substrate tube 66 made of ceramic material such as calcia addition zirconia is used and the air electrode 62 is formed thereon. In this type, the substrate tube has no electro conductivity , so that collecting resistance on the air electrode side is high and the cell property becomes low. Therefore, it has been placing emphasize on the development of the cell 61 type.

These cylindrical solid oxide fuel cells 61 and 67 have simple structures in which the thermal stress on the electrolytic layer 63 becomes small. Therefore, it is highly durable. For example, the cylindrical (longitudinal stripe) solid oxide fuel cell using lanthaumum manganite porous substrate tube (LSM porous substrate tube) which is a product of Siemens Westinghouse Inc., (U.S.A) has proved its stability for some ten-thousand hours by a unit cell.

However, there are following issues in regards to commercializing the cylinder (vertical stripe) solid oxide fuel cell 67.

1. Raw material of lanthaum manganite used as the material for the porous substrate tube is costly.
2. In general, ceramics have low thermal conductivity , so that it tends to have large temperature distributions within the cell. Thus, it requires a careful control in the operation method.
3. The ceramic porous substrate tube 66 is vulnerable to thermal stress and easily damaged.

It is considered that the above-described issues can be overcome by replacing the porous substrate tube 66 with the metallic material. Therefore,'it has been proposed to use the metallic material for the porous substrate tube (Japanese Patent Laid-Open No. 1994-29024, Japanese Patent Laid-Open No. 1994-243879, Japanese Patent Laid-Open No. 1994-36782, Japanese Patent Laid-Open No. 1996-138690, Japanese Patent Laid-Open No. 1998-125346, Japanese Patent Laid-Open No. 1998-172590 and the like).

Fig. 23A and 23B show examples of the cylindrical solid oxide fuel cell.

In cylindrical solid oxide fuel cell (unit cell) 68 shown in Fig. 23, a fuel electrode 64 made of $Ni-Zro_2$ cermet is formed in cylindrical form on the outer peripheral surface of a conductive porous substrate tube 22 made of heat-resistant metallic material (for example, Ni-Cr), whose one end is sealed. A solid oxide electrolytic layer 63 made of $ZrO_2$ is formed thereon and on the sealed bottom as well as over the whole surface of the outer peripheral surface in the vicinity of the bottom. Further, an air electrode 62 made of $LaMnO_3$ is laminated in cylindrical form on a prescribed part of the solid oxide electrolytic layer 63.

However, there has not been any case where metallic materials are used for the porous substrate tube in the structure as shown in Fig. 21 and Fig. 22. The reason for this may be of consideration over the stability in the oxidation atmosphere at high temperatures in the process of manufacturing the cell and the long-term stability in operation of the cell.

If the alumina forming alloys as described can be used as the material for the porous metallic substrate, it is anticipated to achieve a porous metallic substrate, which can bear the oxidation atmosphere at high temperatures during the process for manufacturing the cell and, at the same time, exhibits excellent long-term stability when the cells are in operation. However, there is an issue in the alumina forming alloy that the electrical resistance of the surface oxidation coating is high and the contact resistance with the electrode is extremely large. Therefore, it has been considered difficult to be applied as the material for the porous metallic substrate.

Also, when the porous metallic substrate made of alumina forming alloy is manufactured and the process of manufacturing the cell is performed in an oxidation atmosphere at high temperatures of 1000 °C or more, the porous metallic substrate is oxidized extraordinarily at temperatures lower than the heat-resistant temperature of the bulk (dense body).

The issues in the vertical-stripe type cylindrical solid oxide fuel cells as shown in Fig. 21 and Fig. 22 using the ceramic porous substrate tube that it is costly and vulnerable to the thermal impact may be overcome by replacing the material for the porous substrate tube with metal. However, in the prior art, there is an issue in the metallic porous substrate tube in terms of stability in the oxidation atmosphere at high temperatures during the process of manufacturing the cells and in the long-term stability in operation of the cell.

**SUMMARY OF THE INVENTION**

The present invention has been designed to overcome the foregoing subjects. It is a first object to achieve both excellent oxidation resistance and low contact resistance with the electrode by using an alloy which comprises a protective oxidation coating including aluminum formed on the surface as the material for the porous metallic substrate.

It is a second object of the present invention, by using the above-described alloy as the material for the porous metallic substrate, to provide a cylindrical solid oxide fuel cell in which stable operation can be achieved and the durability and economy are improved. Stainless steels and the like, which is excellent in mass-productivity, oxidation resistance low thermal expansion coefficient as well as heat-resistant and inexpensive can be used as the material for the porous substrate tube. Thus, the strength of the porous substrate tube becomes high and the thermal conductivity is increased, so that the temperature distribution in the cell becomes uniform and the thermal impact resistance can be extremely improved. Thereby, there may face no crack or exfoliation generated in the electrolytic layer and the electrodes even in the case of an abrupt change in the load and increase/decrease in the cell temperature.

The inventors and the like of the present invention have diligently introduced research for overcoming the above-described issues. As a result, they have found to be able to solve the issues through devising the manufacturing method using a material which is excellent in the strength and oxidation resistance, for example, a stainless steel, for the substrate.

In a solid oxide fuel cell according to claim 1 of the present invention for overcoming the above-described issues, a cell having an oxidizer electrode and a fuel electrode being arranged with a solid electrolytic layer therebetween is formed on a porous metallic substrate. It is characterized in that the porous metallic substrate is made of metal in which a coating including aluminum is formed on a surface of the metal constituting the porous metallic substrate.

According to the invention of claim 1, it is possible to suppress oxidation progress on the porous metallic substrate in the steps of manufacturing the cell and in operation of the cell.

In a solid oxide fuel cell according to claim 2 the present invention, a cell having an oxidizer electrode and a fuel electrode being arranged with a solid electrolytic layer therebetween is formed in such a manner that the oxidizer electrode faces a porous metallic substrate. It is characterized in that the porous metallic substrate is made of metal in which a coating, including aluminum and a high-conductive oxide which is generated by a solid phase reaction between an element included in the metal constituting the porous metallic substrate and an element included in the oxidizer electrode, is formed on a surface of the metal constituting the porous metallic substrate.

According to the invention of claim 2, the contact resistance between the porous metallic substrate and the oxidizer electrode can be decreased. Especially, the contact resistance in the low temperature range is decreased , so that it enables to obtain a solid oxide fuel cell which can be operated in a wide temperature range.

In the solid oxide fuel cell according to claim 3 of the invention, a coating applied on the metal surface constituting the porous metallic substrate includes 20to70 wt.% of aluminum.

According to the invention of claim 3, since it is to include 20 wt.% of aluminum or more in the coating formed on the metal surface of the porous metallic substrate, it is possible to suppress oxidation progress on the porous metallic substrate remarkably in the steps of manufacturing the cell and in operation of the cell. Moreover, since it is to include 70 wt.% of aluminum or less, the contact resistance between the porous metallic substrate and the electrodes can be suppressed.

In the solid oxide fuel cell according to claim 4 of the present invention, the specific surface area of the porous metallic substrate Is 0.01to1 $m^2/g$.

According to the invention of claim 4, by having the specific surface area of the porous metallic substrate to be 0.01 $m^2/g$ or more, the effective contact area between the porous metallic substrate and the electrodes can be increased , so that the contact resistance can be decreased. At the same time, in order to maintain the oxidation resistance of the porous metallic substrate, it is practical to have that of 1 $m^2/g$ or less.

The solid oxide fuel cell according to claim 5 of the present invention, in the solid oxide fuel cell of claim 1, 2, 3 or 4, Is characterized in that the mean grain diameter of metal grains constituting the porous metallic substrate is 10 to 50 $\mu$m.

According to the invention of claim 5, by determining the mean grain diameter of the metal grains which constitute the porous metallic substrate to be 10to50 $\mu$m, it becomes possible to manufacture a porous metallic substrate having an ideal specific surface area.

The solid oxide fuel cell according to claim 6 of the present invention, in the solid oxide fuel cell of claim 1, 2, 3, 4 or 5, is characterized in that the porous metallic substrate is made of an alloy including 2.5 wt.% of aluminum or more.

According to the invention of claim 6, by manufacturing the porous metallic substrate using an alloy including 2.5 wt.% of aluminum or more, a sufficient quantity of aluminum can be supplied to the surface oxidation coating , so that a porous metallic substrate which maintain an excellent oxidation resistance can be obtained.

The solid oxide fuel cell according to claim 7 of the invention, an electron conductive and gas permeable interconnector layer is formed in the longitudinal direction on a part of a porous substrate tube while an air electrode, solid oxide electrolytic layer and a fuel electrode are formed in this order on the porous substrate on the part other than the interconnector. It is characterized in that the porous substrate tube is made of a heat-resistant metal.

By using the porous substrate tube made of a heat-resistant metal which is inexpensive and excellent in oxidation resistance, the mass-productivity becomes excellent and the cost for the materials can be remarkably decreased. Further, the strength of the porous substrate tube is high and the conductivity is increased , so that the temperature distribution in the cell becomes uniform and the thermal impact resistance is extremely improved. Thereby, it enables to provide a cell with excellent durability, which can be stably operated without facing cracks and exfoliation in the electrolytic layer and the electrodes even in the case of a sudden change in a load and an increase/decrease in the temperatures of the cell.

The solid oxide fuel cell according to claim 8 of the invention, the heat-resistant metal is ferritic stainless steel includeing iron as a main component.

The ferritic stainless steel exhibits high oxidation resistance and low thermal expansion coefficient of about $12 \times 10^{-6}K^{-1}$, which is similar to the thermal expansion coefficient of the electrodes and electrolyte. Thus, there is small stress generated by the difference between the thermal expansion coefficient between the porous metallic substrate, the electrodes and porous metallic substrate and the electrolyte. Thereby, it enables to achieve more remarkable effects such as excellent durability and stable operation without facing cracks and exfoliation in the electrolytic layer and the electrodes even in the case of a sudden change in a load and an increase/decrease in the temperatures of the cell.

The solid oxide fuel cell according to claim 9 of the invention, in the solid oxide fuel cell of claim 7 or 8, is characterized in that the interconnector layer is made of metal and an middle layer of non-oxidized metal with small porosity is formed in the vicinity of composite interface between the porous substrate tube and the interconnector layer.

The interconnector layer made of metal is excellent in the electron conductivity and gas impermeability. When the middle layer of non-oxidized metal with small porosity is formed in the vicinity of composite interface between the porous substrate tube and the interconnector layer, bonding and electric connection layer becomes excellent.

The solid oxide fuel cell according to claim 10 of the invention, in the solid oxide fuel cell of claim 9, is characterize in that the interconnector layer is made of a heat-resistant metal including iron or nickel as the main component and outer surface has electron conductivity.

The interconnector layer, which is made of a heat-resistant metal including iron or nickel as the main component, such as Fe-Cr based stainless steel or Ni-Cr based alloy is highly stable in the oxidation atmosphere on the air electrode side and in the reducing atmosphere on the fuel electrode side. Moreover, the oxide layer generated on the surface is highly conductive , so that it enables to easily lead the electricity from the interconnector layer.

**BRIEF DESCRIPTION OF THE DRAWINGS**

These and others and advantages of the present invention will become clear from following description with reference to the accompanying drawing, wherein:

Fig. 1 is a cross sectional schematic diagram showing a normal oxidation state of a surface oxidation film formed on a metal surface of a porous metallic substrate;

Fig. 2 is a cross sectional schematic diagram showing an abnormal oxidation state of a surface oxidation film formed on a metal surface of a porous metallic substrate;

Fig. 3 is a schematic diagram of a sample for measuring the contact resistance between the porous metallic substrate and an electrode material;

Fig. 4 is a graph showing the relation between the Al concentration in the surface oxide coating and the contact resistance at 700 °C in an air atmosphere;

Fig. 5 is a schematic diagram of a sample for measuring the contact resistance between a dense body and an electrode material;

Fig. 6 is a graph showing the relation between the temperatures and the contact resistances of the porous metallic substrate and the dense body in the air atmosphere;

Fig. 7 is a cross sectional schematic diagram showing a state where the electrode material has permeated into the porous metallic substrate;

Fig. 8 is a graph showing the relation between the temperatures and the contact resistances of the porous metallic substrate and the dense body in hydrogen atmosphere;

Fig. 9 is a graph showing the relation between the temperatures of each thermally treated sample in the air atmosphere and the contact resistance;

Fig. 10 is a graph showing the relation between the temperatures and the Pt paste contact resistance of each sample which is thermally treated in the air atmosphere;

Fig. 11 is a graph showing the relation between the specific surface area of the porous metallic substrate and the contact area magnification;

Fig. 12 is a graph showing the relation between the grain diameter of the porous metallic substrate and the specific surface area;

Fig. 13 is a graph showing the relation between the grain diameter of the porous metallic substrate and Al concentration inside the grain after thermal treatment;

Fig. 14 is a graph showing the relation between the grain diameter of the porous metallic substrate and the Al content, which are required as a substrate material;

Fig. 15 is a schematic diagram of a manufactured unit cell;

Fig. 16 is a graph showing the initial power generation property of the fabricated unit cell;

Fig. 17 is a graph showing a continuous running property of the fabricated unit cell;

Fig. 18 is a cross sectional schematic diagram of a unit cell of a conventional cylindrical solid oxide fuel cell;

Fig. 19 is an enlarged cross sectional schematic diagram of the unit cell of the conventional cylindrical solid oxide fuel cell;

Fig. 20(a) is an external schematic diagram of a porous substrate tube and Fig. 20(b) is a cross sectional schematic diagram showing the vicinity of the composite interface between an interconnector and the porous substrate tube;

Fig. 21 is an illustration for describing the cell structure of the type of a conventional cylindrical (vertical stripe) solid oxide fuel cell using a porous substrate tube made of a ceramic material, in which the porous substrate tube also functions as an air electrode;

Fig. 22 is an illustration for describing the cell structure of the type of a conventional cylindrical (vertical stripe) solid oxide fuel cell using a porous substrate tube made of a ceramic material, in which the porous substrate tube and the air electrode are made of different materials;

Fig. 23(a) is an illustration showing the structure of another conventional cylindrical solid oxide fuel cell (unit cell) and Fig. 23(b) is an illustration for describing the cross section.

Description of Symbols

| | |
|---|---|
| 1 | Metal plate |
| 2 | Porous substrate tube |
| 3 | Interconnector layer |
| 4 | Small layer of porosity |
| 5 | Pore |
| 6 | Oxide layer |
| 10 | Metal grain |
| 12 | Oxidation coating |
| 14 | Oxide |
| 16 | Pore |
| 18 | Electrode material |
| 20 | Current collecting |
| 22 | Sample for measuring the resistance of the porous metallic substrate |
| 26 | Porous metallic substrate |
| 28 | Plate sample made of a dense body |
| 30 | Sample for measuring the resistance of the dense body |
| 34 | Cell |
| 36 | Oxidizer electrode |
| 38 | Electrolytic layer |
| 40 | Fuel electrode |
| 42 | Cover member |
| 44 | Metal ring |
| 60 | Electroconductive porous substrate tube |
| 61 | Conventional cylinder (longitudinal stripe) solid oxide fuels cell using substrate tube made of a ceramic |
| 62 | Air electrode |
| 63 | Solid oxide electrolytic layer |
| 64 | Fuel electrode |
| 67 | Another conventional cylinder (longitudinal stripe) solid oxide fuels cell using substrate tube made of a ceramic |
| 68 | Conventional cylinder solid oxide fuels cell using substrate tube made of a metal. |

## DETAILED DESCRIPTION OF THE PREFERRED EMBODIMENT

While the presently preferred embodiment of the present invention has been shown and described, it will be understood that the present invention is not limited thereto, and that various changes and modification may be made by those skilled in the art without departing from the scope of the invention as set forth in the appended claims.

The present invention will be described in detail below.

The metallic material used for forming a porous substrate tube of a solid oxide fuel cell of the present invention is a heat-resistant metal. The unit cell is manufactured at about 800 to 1100 °C and operated at 500 °C or more. Therefore, it is necessary to use the heat-resistant metal which is stable in the air and at temperatures within the above-described range as the metallic material for forming the porous metallic substrate.

Specifically, it is necessary to use the heat-resistant metal which exhibits the oxidation resistance of about 0.01 mg/cm$^2$ or less per an hour in mass increase by a unit area due to oxidation of the porous substrate tube when, at least, the cell is in operation.

Further, it is desirable that the thermal expansion coefficient be matched therewith , so that the electrode and electrolytic layer are not to be damaged at the time of manufacturing the unit cell and when there are changes in temperatures at the time of starting/stopping the fuel cell. It is desirable to fall within the range from $10 \times 10^{-6}$ to $14 \times 10^{-6}K^{-1}$.

Specifically, examples of such hest-resistant metal are austenitic stainless steel, martensitic stainless steel, ferritic stainless steel, and nickel-based heat-resistant alloys such as Inconel and Hastelloy.

The thermal expansion coefficient of the austenite stainless steel is, for example, 16 to $17 \times 10^{-6}K^{-1}$ which is rather high. The thermal expansion coefficient of the martensitic stainless steel is close to that of the ferritic stainless steel to be, for example, 10 to $14 \times 10^{-6}K^{-1}$ while the oxidation resistance at high temperatures is rather low. The thermal expansion coefficient of the nickel-based heat-resistant alloys such as Inconel and Hastelloy is about 16 to 17 $\times 10^{-6}K^{-1}$, which is rather high. On the other hand, that of the ferritic stainless steel is about $12 \times 10^{-6}K^{-1}$, which is low

and the oxidation resistance is excellent. Therefore, the ferritic stainless steel can be used as the preferable one for the present invention among the above-described metallic materials.

Examples of the ferritic stainless steel which can be preferably used in the present invention will be described below.

The ferritic stainless steel can be preferably used since it has the low thermal expansion coefficient, excellent oxidation resistance and can be used at low cost. The ferritic stainless steel includes 11to32 wt.% of chrome and includes C, Si, Mn, and may further include Al, Ti, Mo and other elements depending on the circumstances. Examples of the feritic stainless steel are chromia forming alloy comprising a protective coating including $Cr_2O_3$ as the main component formed on the surface and alumina forming alloy comprising a protective coating including $Al_2O_3$ as the main component formed on the surface. The alumina forming alloy can be preferably used in the present invention.

An example of the alumina forming alloy may be Fe-Cr-Al based stainless steel which is a material including iron as the main component and aluminum, in which oxide layer including $Al_2O_3$ as the main component is formed on the surface in the oxidation atmosphere at high temperatures (at the time of manufacturing the fuel cell and when the fuel cell is in operation). An example of Fe-Cr-Al based stainless steel is a material including Fe as the base, and 24 wt.% of Cr, 15 wt.% of Al and, as in the regular stainless steel, a very small quantity of C, Si, Mn and the like.. With this type of material, by including several wt.% or more of Al, an oxide layer with high resistance including $Al_2O_3$ as the main component is formed on the surface in the oxidation atmosphere at high temperatures. This layer has an effect of suppressing the progress of oxidation into the inside of the metal. On the other hand, it exhibits high resistance so that, conventionally, it is difficult for the oxidizer electrode side to have a current collecting function.

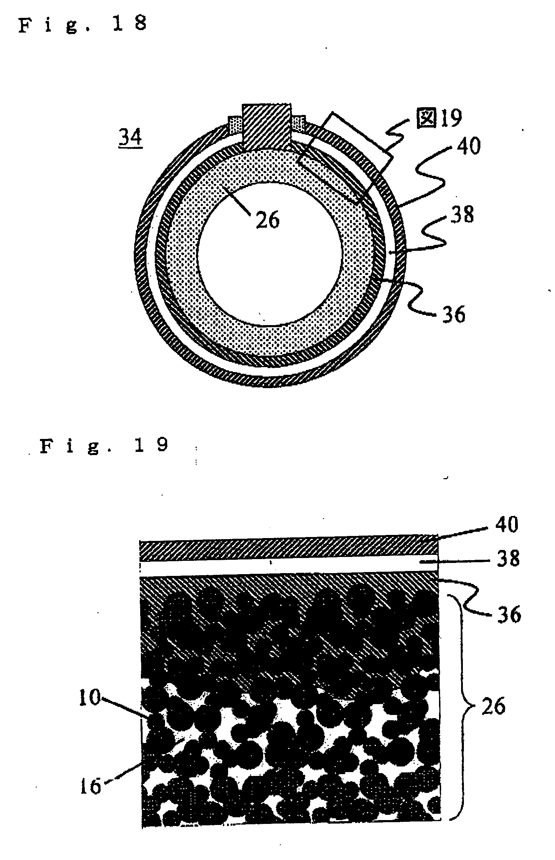

Fig. 18 is a cross sectional schematic diagram, which shows a conventional solid oxide fuel cell 34 in which an oxidizer electrode 36, a solid oxide electrolytic layer 38, and a fuel electrode 40 are formed on a porous substrate tube 26 in this order. The figure is for describing a solid oxide fuel cell 34 used in the oxidation atmosphere at high temperatures (at the time of manufacturing the fuel cell and when the fuel cell is In operation). Fig. 19 shows an enlarged schematic diagram of the cross section. Numeral 10 is a metal grain, and an oxide layer with high resistance is formed In the periphery of the metal grains 10, pores 16 formed by the metal grains, in the vicinity of the interface between the porous substrate tube 26 and the oxidizer electrode 36, and the like.

Such porous substrate tube 26 is manufactured through a known method in which grains with grain diameter of about some tens to hundreds μm made of the above-described heat-resistant metallic material are mixed with a binder, kneaded, extruded, dried, degreased, and sintered in vacuum.

It is important to control the degree of sintering. If it is too high, the gas permeability becomes low and the cell property is deteriorated. If the degree of sintering is too low, issues of deterioration in the strength of the porous substrate tube 26 (becomes to be easily damaged) and thermal conductivity during the operation is caused.

The reason is that an oxide layer with several μm to some tens μm thickness is formed on the surface of the material when the porous substrate tube 26 is exposed to the air atmosphere at high temperatures, and if the degree of sintering is insufficient, the oxide layer spreads onto the whole portion of the substrate tube thereby disconnecting the connection between micro metallic grains.

Therefore, it has been understood that it is desirable for the porosity to be 30to60 % and more preferably to be 40to50 %, and the mean pore diameter is preferably to be about several μm to some hundreds μm. In the unit cell manufactured in examples to be described later, the external diameter of the porous substrate tube 26 is set to be 20 mm.

Next, an example of manufacturing an interconnector layer will be described.

Two types of the interconnector layers as shown in Fig. 21A and 21B will be described.

Type 1 shown in Fig. 21 is an interconnector layer 3 obtained by welding a metal plate 1 onto a porous substrate tube 2. At the time of welding, a part of the surface of the porous substrate tube 2 is also welded so that a layer 4 in metallic state (not oxidized) with low porosity (or dense) is formed in the vicinity of the joining interface between the porous substrate tube 2 and the interconnector layer 3. The layer 4 has an effect of bonding the both and providing excellent electric connection.

Type 2 shown in Fig. 21 is so manufactured that a part of the porous substrate tube 2 becomes dense by controlling the composition of the material for the porous substrate tube 2 so as to have the part function as an interconnector layer 3. In this case, as in the same manner as the type 1, a layer with low porosity, which is oxidized by low degree, Is formed in the vicinity of the joining interface between the porous substrate tube 2 and the porous part functioning as the interconnector layer. An example of the manufacturing method may be the one in which the grain diameter of grain and the amount of adding a binder and a dispersant are controlled at the time of extruding so as to have, for example, only the above-described part densified. Other examples may be a method in which the porous part of the porous substrate tube 2 is melted by laser afterwards, and the like.

In Embodiments to be described later, the width of the interconnector layer 3 was set to be 8 mm. The width of the interconnector layer 3 is preferable to be about 5 mm or more in terms of simplification of manufacture and the collecting resistance (when the width is too narrow, the electric current concentrates and the resistance is increased).

Inversely, if the width is too wide, the electrode area becomes small , so that it is desirable to be about 10 mm or less.

Stability is required for the material used for forming the interconnector layer 3, in the oxidation atmosphere on the air electrode side and in the reducing atmosphere on the fuel electrode side. Futher, high conductivity is required for loading electricity from the outer surface (fuel electrode side). Therefore, a heat-resistant alloy including iron or nickel as the main component and about 5to30 wt.% of Cr is desirable. In the case of a structure in which different materials are used for the air electrode side and the fuel electrode side and both are laminated with each other, the fuel electrode side may be formed of pure nickel. When the material including iron as the main component is used for the interconnector layer, there may face issues of oxidation by vapor in the fuel or deterioration caused by carburization at the time of using fuel including hydrocarbon gas. Therefore, in this respect, an alloy includeing Ni as the main component is advantageous.

Embodiment 1

[ Manufacture of Porous Metallic Substrate ]

A porous metallic substrate A with the external diameter : 20 mm, the tube thickness: 1.5 mm and the porosity : 40% was manufactured by mixing alloy grain with grain diameter of about 10 μm to 100 μm made of a product of Hitachi Metals Ltd., HRE5® (Fe-Cr-Al series) including (Fe : Bal. Cr: 22,9, Al: 5.0, Ti: 0.22, Si : 0.43, Mn: 0.0039, Ni: 0.20 wt. % by ICP measurement).

Then, a porous metallic substrate B was manufactured by the same manufacture method as that of the porous metallic substrate A using HRE5® with different production lot from that of the porous metallic substrate A (Fe-Cr-Al series) including (Fe : Bal. Cr: 23.4, Al: 4.9, Ti : 0.22, Si : 0.39, Mn : 0.015, Ni: < 0.01 wt. % by ICP measurement).

As a comparative example, a porous metallic substrate X was manufactured by the same manufacture method as that of the porous metallic substrate A using a product of Hitachi Metals Ltd., ZMG232® (Fe-Cr series : a material with 22 wt. % of Cr to which a very small quantity of La and Zr was added so as to improve the oxidation resistance compared to a regular Fe-Cr based stainless steel).

Oxidation Resistance Test

The above-described three types of porous metallic substrates were thermally treated at 1000 to 1200 °C in the air for eight hours.

The samples after the above-described thermal treatment were buried and cut and microstructures of the cross sections were observed by SEM (HITACHI S-2300). Moeover, concentration of the elements in the oxidation coating generated on the surfaces of the metal grains which constitutes the porous metallic substrate were analyzed by X-Ray Microanalyzer (HORIBA EMAX-3700). There is a little dispersion in the measured results of the element concentration. Thus, the measurement was carried out at 5to10 areas and the mean values were obtained.

Table 1 shows the element concentration in the surface oxidation coating and the oxidation state of each sample.

[Table 1]

| The element concentration and the oxidation state in the surface oxidation coating of each sample | | | | | | | | |
|---|---|---|---|---|---|---|---|---|
| | Thermal treatment condition | | Element concentration in the surface oxidation coating | | | | | Oxidation state |
| Type | Temperature (°C) | Hour (h) | Fe | Cr | Al | Mn | La | |
| A | 1000 | 8 | 41.35 | 20.88 | 26.89 | 0.58 | 0.90 | O |
| | 1100 | 8 | 37.65 | 15.66 | 36.71 | 1.48 | 0.84 | O |
| | 1150 | 8 | 72.55 | 8.52 | 14.61 | 1.01 | 0.30 | X |
| B | 1000 | 8 | 24.25 | 10.50 | 55.13 | 0.97 | 1.78 | O |
| | 1100 | 8 | 24.78 | 11.77 | 60.12 | 0.28 | 0.96 | O |
| | 1150 | 8 | 22.35 | 16.51 | 50.51 | 0.70 | 1.45 | O |
| | 1200 | 8 | 71.00 | 10.72 | 16.41 | 0.00 | 0.20 | X |
| C | 1000 | 8 | - | - | - | - | - | X |

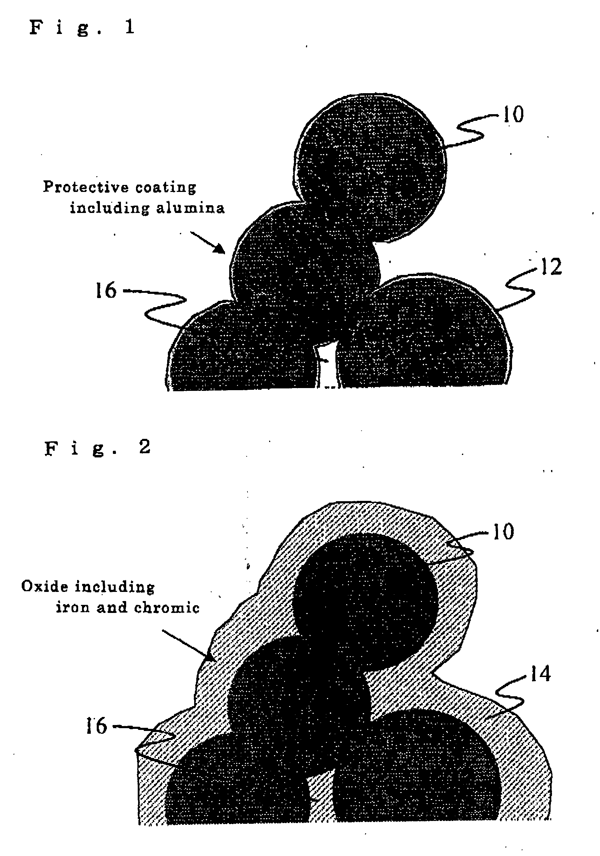

"O" checked in the oxidation state of the Table 1 represents a normal oxidation state in which an oxidation coating 12 with a thickness of about several μm is formed on the surface of the grains 10 constituting the porous metallic substrate as shown in Fig. 1 as a model while "X" (abnormal oxidation) represents the state in which oxidation is progressed and an oxide 14 with a thickness of some ten μm or more is grown as shown in Fig. 2.

In the abnormal oxidation state, the grown oxide 14 closes the pores 16 of the porous substrate and blocks the gas diffusion. Further, the volume of the porous metallic substrate expands due to the growth of the oxide 14 and causes cracks and exfoliation in the electrode and electrolytic layer formed thereon. When the abnormal oxidation proceeds further, all the metal grains are to be oxidized at last.

The porous metallic substrate A exhibited a normal oxidation state under the thermal treatment at 1000 °C for eight hours, however, it reached the abnormal oxidation state after the thermal treatment at 1150 °C for eight hours The porous metallic substrate B exhibited a normal oxidation state under the thermal treatment at 1150 °C for eight hours, however, it reached the abnormal oxidation state after the thermal treatment at 1200 °C for eight hours. Further, the porous metallic substrate X was observed to be in the abnormal oxidation state under the thermal treatment at 1000 °C for eight hours.

From the Table 1, it can be seen that the concentration of aluminum in the surface oxidation coating 12 is 20 wt.% or more in the normal oxidation state and 20 wt.% or less in the abnormal oxidation state. Therefore, it is necessary that at least 20 wt. % or more of aluminum is present in the surface oxidation coating 12 in order to maintain an excellent oxidation resistance. In other words, it is considered that an excellent oxidation resistance can be maintained and oxidation progress on the porous metallic substrate can be remarkably suppressed by manufacturing the oxidation coating including 20 wt.% or more of aluminum.

The concentration of aluminum in the surface oxidation coating 12 is influenced by the composition of the alloy used for the porous metallic substrate and, especially, by the content of aluminum and types and quantity of the elements to be slightly added. Further, it is influenced by the temperatures and time of thermal treatment during the process of manufacturing the cell. Thus, it is possible to maintain the concentration of aluminum to 20 wt. % or more in the surface oxidation coating by keeping these to be appropriate.

Embodiment 2

Preparation of Electrode

Electrode slurry was prepared by the following method.

<Manufacture of Slurry Solvent>

A slurry solvent was prepared by mixing ethanol, terpineol, ethylcellulose, anti-foam agent, and dispersing agent by the weight percentages of 56 : 37 : 6.8:0.1:0.1.

<Manufacture of Oxidizer Electrode Slurry>

Oxidizer electrode slurry was prepared by mixing grain of a mixture, which is obtained by mixing $La_{0.85}Sr_{0.15}MnO_3$ grain with the mean grain diameter of 2 μm and YSZ (8 mol% of $Y_2O_3$ to 92 mol% of $ZrO_2$) grain with the mean grain diameter of 0.5 μm by the weight percentage of 8 : 2, and the above-described slurry solvent by the weight percentage of 3 : 7.

<Manufacture of Fuel Electrode Slurry>

Fuel electrode slurry was prepared by mixing grain of a mixture, which is obtained by mixing nickel oxide grain with the mean grain diameter of 3 μm and YSZ grain with the mean grain diameter of 0.5 μm by the weight percentage of 9 : 1, and the above-described slurry solvent by the weight percentage of 1:1.

[Measurement of Contact Resistance with Oxidizer Electrode material]

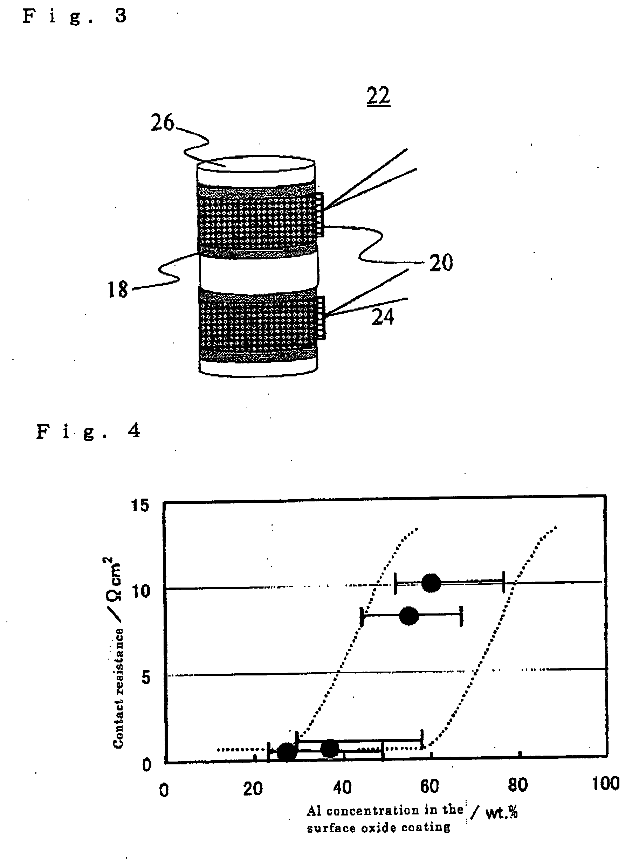

Oxidizer electrode slurry 18 prepared by the above-described method was applied to the position shown in Fig. 3 on a sample A-0 which is obtained by performing thermal treatment on the porous metallic substrate A at 1000 °C in the air for eight hours, a sample A-1 which is obtained by performing thermal treatment on the porous metallic substrate A at 1100 °C in the air for eight hours, a sample B-0 which is obtained by performing thermal treatment on the porous metallic substrate B at 1000 °C in the air for eight hours, and a sample B-1 which is obtained by performing thermal treatment on the porous metallic substrate B at 1100 °C in the air for eight hours, and then the slurry was dried.

After drying, Pt steel (collecting body) 20 was pasted on the oxidizer electrode 18 and the oxidizer electrode slurry 18 was applied again onto the current collecting 20 and dried thereby to manufacture a sample 22 for measuring the resistance of the porous metallic substrate.

After increasing the temperatures of the four prepared samples to be at 1000 °C in an electric furnace, the contact resistance was measured at the temperatures within the range between 1000 °C and 500 °C. The resistance values were converted to the values per unit area of the Pt collecting body.

[Analysis of Concentration of Elements in the Surface Oxidation Coating]

The concentrations of the elements in the surface oxidation coating were analyzed using the samples which were under the same conditions as that of the four samples measured the above-described contact resistance. Analysis was performed by measuring 5-10 areas per sample and the mean values were obtained. Table 2 shows the concentrations of the elements in the surface oxidation coating of the four samples.

| The element concentration in the surface oxidation coating of each sample | | | | | | | |
|---|---|---|---|---|---|---|---|
| Type | Thermal treatment condition | | Element concentration in the surface oxidation coating | | | | |
| | Temperature (°C) | Hour (h) | Fe | Cr | Al | Mn | La |
| A | 1000 | 8 | 41.35 | 20.88 | 26.89 | 0.58 | 0.90 |
| | 1100 | 8 | 37.65 | 15.66 | 36.71 | 1.46 | 0.84 |
| B | 1000 | 8 | 24.25 | 10.50 | 55.13 | 0.97 | 1.78 |
| | 1100 | 8 | 24.79 | 11.77 | 60.12 | 0.26 | 0.98 |

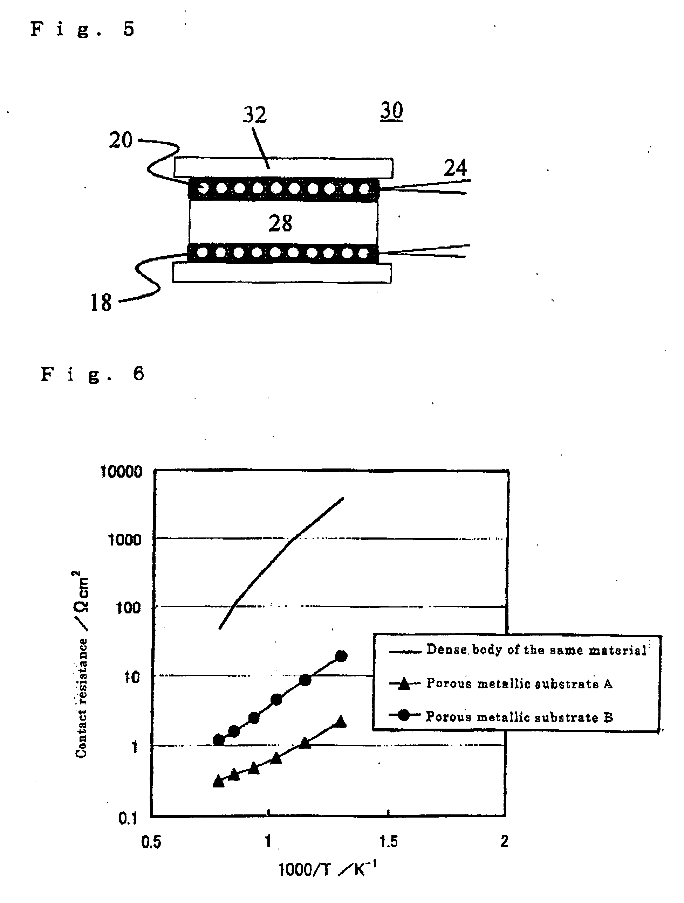

Fig. 4 shows the relation between the aluminum concentration in the surface oxidation coating and the contact resistance at 700 °C. The graph was plotted including a margin of error considering the mean value and dispersion because there was dispersion in the concentration of the elements in the surface oxidation coating depending on the area of measurement.

It can be seen from the results that the contact resistance abruptly increases when the concentration of the aluminum in the surface oxidation coating 12 exceeds a specific value. Especially, when it exceeds the value of about 70 wt.%, the contact resistance with the oxidizer electrode material 18 is extremely large.

Inversely, it can be considered to have the relatively small contact resistance when it is 70 wt.% or less. In the Embodiment 1, it was found that 20 wt.% of aluminum or more was necessary for maintaining the oxidation resistance. Therefore, it was found that both the excellent oxidation resistance and low contact resistance were to be obtained when the aluminum concentration in the surface oxidation coating 12 was within the range between 20 wt.% and 70 wt.%.

Embodiment 3

[Measurement of the Contact Resistance with the Oxidizer Electrode Material]

After performing thermal treatment on the porous metallic substrate A and the porous metallic substrate B at 1000 °C in the air for eight hours, the oxidizer electrode slurry 18 prepared by the method described in the "Manufacture of Electrode" was applied to the positions shown in Fig. 3 and then dried. After drying, the Pt steel (collecting body) 20 is pasted on the oxidizer electrode 18 and the oxidizer electrode slurry 18 was applied again onto the collecting body 20 and dried thereby to manufacture a sample 22 for measuring the resistance of the porous metallic substrate.

Further, after performing thermal treatment on a plate shape sample 28 made of a dense body of the same material (HRE5®) as that of the porous metallic substrate A at 1000 °C in the air for eight hours, as shown in Fig. 5, the oxidizer electrode slurry 18 prepared by the method described in the "Manufacture of Electrode" was applied to the front and back surfaces of the dense body 28 and then dried. After drying, the Pt steel (collecting body) 20 is pasted on the oxidizer electrode 18 and the oxidizer electrode slurry 18 was applied again onto the collecting body 20 and dried thereby to manufacture a sample 30 for measuring the resistance of the dense body.

After increasing the temperatures of the three prepared samples to be at 1000 °C in an electric furnace, the contact resistance was measured at the temperatures within the range between 1000 °C and 500 °C. The resistance values were converted to the values per unit area of the Pt collecting body.

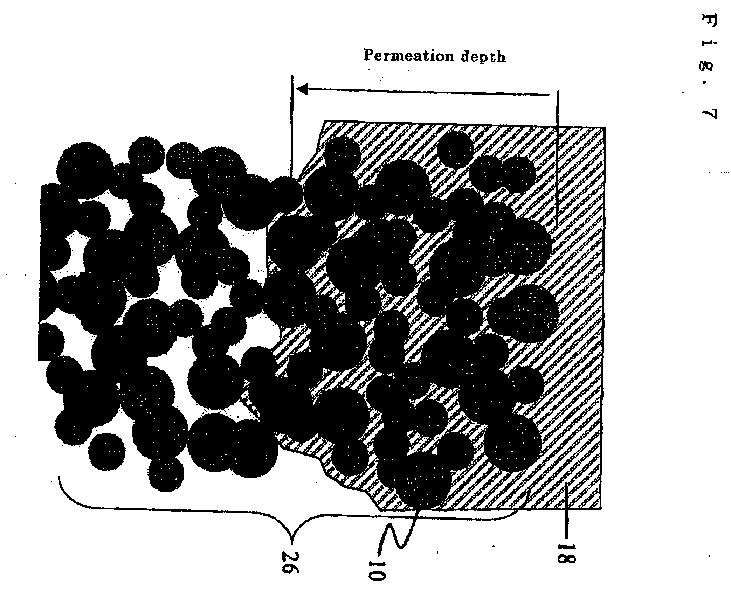

Fig. 6 shows the results of the resistance measurement. The porous metallic substrates A and B exhibited the resistance values smaller by one to two figures compared to that of the dense body. The reason for this may be that the contact area is expanded three-dimensionally due to the facts that the specific surface area of the porous metallic substrate 26 is larger, the electrode material 18 permeates (see Fig. 7) to the inside the porous metallic substrate 26, and the like.

Further, it can be considered that the contact resistance of the porous metallic substrate A is smaller by one figure than the porous metallic substrate B due to the difference in the aluminum concentration in the surface oxidation coating 12.

[Measurement of the Contact Resistance with Fuel Electrode Material]

After performing the thermal treatment on the porous metallic substrate A at 1000 °C in the air for two hours, the oxidizer electrode slurry 18 prepared by the method described in the "Manufacture of Electrode" was applied to the areas shown in Fig. 3 and then dried. After drying, the Pt steel (collecting body) 20 is pasted on the oxidizer electrode 18 and the oxidizer electrode slurry 18 was applied again onto the collecting body 20 and dried thereby to manufacture a sample 22 for measuring the resistance of the porous metallic substrate.

Further, after performing the thermal treatment on the plate shape sample 28 made of a dense body of the same material (HRE5®) as that of the porous metallic substrate A at 1000 °C in the air for eight hours, as shown in Fig. 5, the oxidizer electrode slurry 18 prepared by the method described in the "Manufacture of Electrode" was applied to the front and back surfaces of the dense body 28 and then dried. After drying, the Pt steel (collecting body) 20 is pasted on the oxidizer electrode 18 and the oxidizer electrode slurry 18 was applied again onto the collecting body 20 and dried thereby to manufacture a sample 30 for measuring the resistance of the dense body.

After increasing the temperatures of the two prepared samples in an electric furnace to prescribed temperatures to be at 300 to 1000 °C in hydrogen atmosphere, the resistance was measured. The resistance values were converted to the values per unit area of the Pt collecting body.

Fig. 8 shows the results of the resistance measurement. There was not much change in the resistance in the hydrogen atmosphere and it was 0.2 to 0.3 $\Omega$cm$^2$ in the porous metallic substrate A and 3 to 4 $\Omega$cm$^2$ in the dense body. The reason that the porous metallic substrate A showed the resistance value smaller by one figure or more compared to the sample of the dense body may be, as in the contact resistance with the oxidizer electrode material, that the contact area is expanded three-dimensionally due to the facts that the specific surface area of the porous metallic substrate 26 is larger, the electrode material 18 permeates to the inside the porous metallic substrate 26, and the like.

Further, the contact resistance with the fuel electrode material was not influenced by the temperatures very much and it slightly increased by the temperature increase. The results indicates that the nickel as the fuel electrode material is in contact directly with the metal grains which constitutes the porous metallic substrate, and the electronic conduction via the contact area is dominant in terms of the electronic conduction between the fuel electrode and the porous metallic substrate. In other words, it can be considered that the growth of the surface oxidation coating is slow in reducing atmosphere , so that the metallic surface is exposed in the micro defected part on the surface oxidation coating and the nickel grains are to be in contact therewith.

Embodiment 4

[Measurement of the Contact Resistance with Fuel Electrode Material]

A sample (1) was prepared using the porous metallic substrate B which had been thermally treated at 1000 °C in the air for eight hours, for measuring the contact resistance with the oxidizer electrode material as shown in Fig. 3. Then, the sample (1) was thermally treated at 1100 °C in the air for two hours (sample (2)) and the sample (2) was thermally treated further at 1100 °C in the air for six hours. In short, the sample (1) was thermally treated at 1100 °C in the air for the total of eight hours to obtain a sample (3). Then, the sample (3) was thermally treated at 1100 °C in the air for eight hours (total of sixteen hours) to manufacture a sample (4). Measurement of the resistance was performed on each sample (1) to (4).

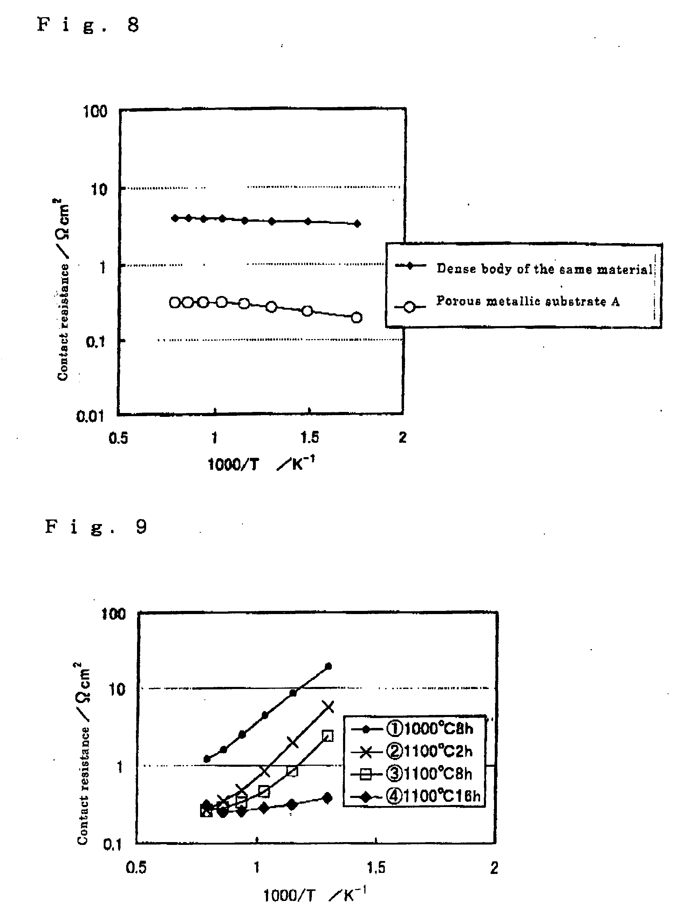

Fig. 9 shows the results of the resistance measurements. The resistance showed a decrease when the thermal treatment was performed at 1100 °C. Moreover, slope of the line became moderate and, especially, the resistance at the low temperatures tended to become small as the time for thermal treatment at 1100 °C was extended.

[Analysis of Elements in the Surface Oxidation coating]

The element distributions of the surface oxidation coating in the samples manufactured under the same conditions as the samples (3) and (4) used in the above-described resistance measurements were measured by the same method as that of the Embodiment 3 shows the results.

[Table 3]

| The element concentration in the surface oxidation coating of each sample | | | | | | | |
|---|---|---|---|---|---|---|---|
| Type | Thermal treatment condition | | | Element concentration in the surface oxidation coating | | | | |
| | Temperature (°C) | | Hour (h) | Fe | Cr | Al | Mn | La |
| (3) | After oxidizer electrode applied | 1100 | 8 | 22.07 | 13.60 | 36.64 | 10.36 | 12.08 |
| (4) | After oxidizer electrode applied | 1100 | 16 | 27.20 | 23.28 | 34.63 | 4.84 | 7.14 |

It can be seen from the table 3 that, compared to the porous metallic substrate alone, the aluminum concentration in the surface oxidation coating is low and the concentration of lanthaumum and manganese is increased when they were in contact with the oxidizer electrode material and thermally treated at 1100 °C in the air. This is caused by the phase reaction generated between the lanthaum manganite ($La_{0.85}Sr_{0.15}MnO_3$) in the oxidizer electrode material and the oxidation coating on the surface of the porous metallic substrate.

From the above-described results, the contact resistance of the porous metallic substrate between the oxidizer electrode material decreased by the thermal treatment at 1100 °C in the air since there was the phase reaction generated between the porous metallic substrate surface and the oxidizer electrode material and the aluminum concentration in the surface oxidation coating decreased relatively. Moreover, it can be considered that the slope of the line in the Fig. 9 became moderate and the resistance became small especially at the low temperatures because the iron and chrome included in the surface oxidation coating reacted to lanthaum manganite, and perovskite oxide such as $LaFeO_3$, $LaCrO_3$, $LaMnO_3$ with high conductivity, having a small electronic conductive activation energy, was generated in the surface oxidation coating.

[Measurement of the Contact Resistance using Pt paste]

For comparison, the sample (1) as shown in the Fig. 3 was prepared using Pt paste instead of using the oxidizer electrode slurry, for measuring the contact resistance. Then, the sample (1) was thermally treated at 1100 °C in the air for the total of eight hours to obtain a sample (2) and the sample (2) was then thermally treated at 1100 °C in the air for eight hours (total of sixteen hours) to obtain a sample (3). Measurements of the resistance were performed on each sample (1) to (3).

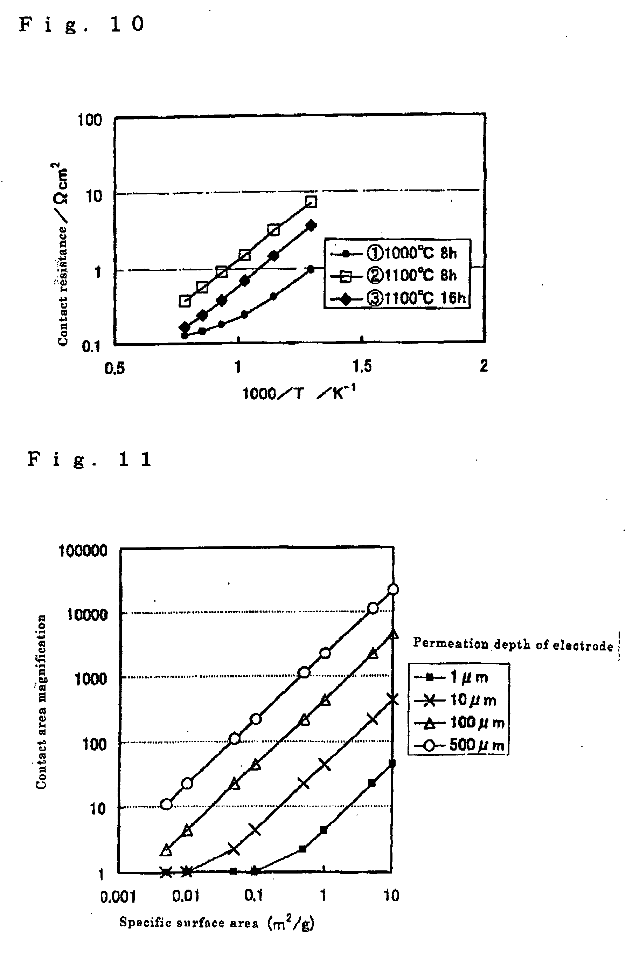

Fig. 10 shows the results. The resistance values were generally smaller than the case of using the oxidizer electrode material, however, there is no decrease in the resistance by performing the thermal treatment at 1100 °C. According to this, it has been proved with high possibility that the slope of the line became moderate by the thermal treatment as shown in the Fig. 9 due to the reaction between the porous metallic substrate surface and the oxidizer electrode material.

When the Pt paste was used, the resistance became smaller by one figure compared to that of the case using the oxidizer electrode slurry. The reason for this may be that the conductivity of Pt is higher by two figures or more than that of lanthaum manganite and there are many micro contact areas with the grains which constitute the porous metallic substrate since the sintering property of Pt is high.

Based on the results described above, it has been verified that the aluminum concentration in the surface oxidation coating can be decreased and, at the same time, a highly conductive oxide can be generated when the phase reaction was generated between the oxidation coating on the porous metallic substrate surface and the oxidizer electrode material at high temperatures.

Through the method, the contact resistance between the porous metallic substrate and the oxidizer electrode can be decreased. Especially, by a decrease in the resistance on the low temperature side, it enables to obtain a useful porous metallic substrate which exhibits low contact resistance over the wide range of temperatures.

In the present embodiments, lanthaum strontium manganite (Ls, Sr) $MnO_3$ was used for the oxidizer electrode material. However, lanthaumum-based pevroskite oxide, which is generally used for the oxidizer electrode material, may be used instead.

In addtion, another material may be applied and thermally treated before applying the oxidizer electrode material as the surface treatment of the porous metallic substrate. In this case, it is to use a material which generates a conductive oxide while generating the phase reaction with the oxidation coating of the porous metallic substrate surface to maintain the appropriate aluminum concentration in the surface oxidation coating. Examples of such material may be oxides including titanium, chrome, manganese, iron, cobalt, nickel, copper, yttrium, magnesium, calcium, strontium, barium, lanthaumum, cerium or the like.

Although the case of the thermal treatment at 1100 °C has been described, it is not limited to 1100 °C as long as it is the condition in which the above-described reaction appropriately proceeds at the heat-resistant temperature of the porous metallic substrate or less.

Embodiment 5

[Measurement of the Specific Surface Area]

After performing the thermal treatment on the porous metallic substrate A at 1000 °C in the air for one hour, it is pulverized into the sorder of several mm size and the specific surface area was measured by the nitrogen absorption method (QUANTACHROME AUTOSORB 1).

The result showed that the specific surface area of the porous metallic substrate was $0.26 m^2/g$.

[Calculation of the Effective Contact Area between the Porous Substrate and the Electrode]

Next, the effective contact area between the porous metallic substrate and the electrode is obtained provided that the external diameter of the porous metallic substrate is 20 mm, the internal diameter is 17 mm, the length is 10 mm and the porosity is 40 %.

The volume of the above-described porous metallic substrate on the appearance is:

Expression 1

$$(1 \times 1 \times \pi - 0.85 \times 0.85 \times \pi) \times 1 = 0.871 \ (cm^3)$$

The porosity is 40 % for the volume of $0.871 \ cm^3$, so that the volume of the bulk (metallic part) is:

Expression 2

$$0.871 \times 0.6 = 0.523 \ (cm^3)$$

The porous metallic substrate material is ferritic stainless and the true density is about $8 \ g/cm^3$, so that the mass of the above-described porous metallic substrate is:

Expression 3

$$0.523 \times 8 = 4.18 \ (g)$$

The measured value of the specific surface area of the porous metallic substrate was $0.26 \ m^2/g$, so that the surface area of the above-described porous metallic substrate is:

Expression 4

$$4.18 \times 0.26 = 1.09 \ (m^2) = 10900 \ (cm^2)$$

It was confirmed by SEM observation that, as shown in Fig. 7, the slurry permeated into the inside of about 50 $\mu$m from the surface of the porous metallic substrate when the oxidizer electrode slurry was applied onto the external surface. Thus, the micro-scopic contact areas between the grains constituting the porous metallic substrate and the oxidizer electrode is to be;

Expression 5

$$10900 \ (\text{cm}^2) \times 50 \ (\mu\text{m})/1.5 \ (\text{mm}) \fallingdotseq 363 \ (\text{cm}^2)$$

Therefore, it has been found that , actually there was a contact area of close to sixty times as much with respect to the appearance application area of the oxidizer electrode; $2 \times 3.14 \times 1 = 6.28 \ \text{cm}^2$.

From the calculated results, it is evident that the contact resistance as low as about one sixtieth with respect to the case of using the dense body can be obtained by achieving a high specific surface area, having the electrode being permeated to the inside the porous metallic substrate, and the like.

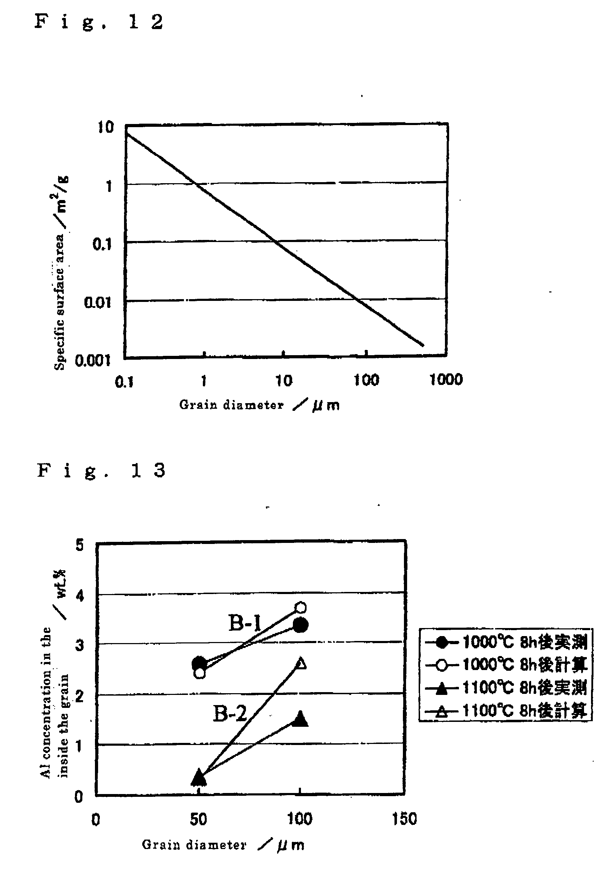

Fig. 11 shows the effective contact area (the ratio against the area on the appearance) between the porous metallic substrate and the electrode, which is obtained by the above-described calculation method having the specific surface area of the porous metallic substrate and the permiation depth of the electrode as the parameters. From Fig. 11, it is found that the effective contact area can be increased through increasing the specific surface area of the porous metallic substrate or increasing the permiation depth of the electrode into the inside.

The specific surface area of the porous metallic substrate is influenced by the distributions of the diameters of the constituting grains and the degree of sintering. However, it is possible to obtain the approximate value as follows. For example, assuming that the surfaces of the constituting grains are smooth, the diameters of all the grains are the same and the sintering degree is low, the relation between the grain diameter and the specific surface area can be obtained as shown in Fig. 12. From Fig. 12, it can be estimated that the specific surface area is about 0.01 m$^2$/g when the grain diameter is 100 $\mu$m, and the specific surface area is 0.1 m$^2$/g when the grain diameter is about 10 $\mu$m. The specific surface area increases as the grain diameter becomes smaller. Further, the surfaces of the grains are not necessarily smooth , so that it is anticipated the specific surface area becomes rather higher than the estimation on many occasions.

Further, in addition to the embodiment, it is possible to manufacture a substrate using metal fiber. In this case, it is also possible to estimate the relation between the fiber diameter and the specific surface area in the same manner. Assuming that the surfaces of the fibers constituting the substrate are smooth and the diameters of all the fibers are the same, it can be estimated that the specific surface area is about 0.01 m$^2$/g when the fiber diameter is about 50 $\mu$m, and the specific surface area is about 0.1 m$^2$/g when the fiber diameter is 5 $\mu$m. The specific surface area increases as the fiber diameter becomes smaller. Further, as the case of the grains, the surfaces are not necessarily smooth , so that it is anticipated the specific surface area becomes rather higher than the estimation on many occasions.

The permiation depth of electrode can be controlled through adjusting the wettability between the porous metallic substrate and slurry viscosity by selection of the types of electrode slurry solvent and the mixing ratio of solvent/ grain, which are to be applied on the porous metallic substrate. In other words, the electrode can be permeated into the inside of the porous metallic substrate through increasing the wettability and decreasing the slurry viscosity.

When the specific surface area of the porous substrate is excessively increased, the oxidation resistance tends to decrease. Thus, for practical use, the area of about 1 m$^2$/g or less is desirable. Moreover, when the permiation depth of the electrode is excessive, it closes the pores in the porous metallic substrate and interrupts the gas diffusion. Therefore, for practical use, the permeation is desirable to be about 500 $\mu$m and less. However, this is not true in the case where only the surfaces of the grains constituting the porous metallic substrate are lightly coated. It is desirable to determine the value of the specific surface area and the permeation depth of the electrode from the relation shown in Fig. 11 so as to increase the contact area between the porous metallic substrate and the electrode as large as possible under consideration of these condition.

The results can be applicable not only to the contact resistance with the oxidizer electrode material but also to the contact resistance with the fuel electrode material in the same manner. Further, it has been described by referring to the case where the electrode material permeates into the inside of the porous metallic substrate. However, in order to improve the collecting effect, it is also possible to apply a highly conductive material, which is similar to the electrode material, into the porous metallic substrate beforehand. For example, when using lanthaum manganite oxide as the oxidizer electrode material, it is possible to apply lanthaum cobaltite oxide into the porous metallic substrate beforehand as the current collecting material.

Embodiment 6

[Measurement of Aluminum Concentration inside Grains]

The aluminum concentration inside the grains constituting the porous metallic substrate were measured using a sample B-1 obtained by performing the thermal treatment on the porous metallic substrate B at 1000 °C for eight hours and a sample B-2 obtained by the performing thermal treatment on the porous metallic substrate B at 1100 °C for eight hours by X-Ray Microanalyzer (HORIBA EMAX-3700). At the time of measurement, the inside aluminum concentration varied depending on the grain diameters. Thus, measurements of the aluminum concentration were performed in the center of the five to ten grains each, selected from the grains with the diameter of about 100 μm and about 50 μm.

Fig. 13 shows the measured results. The aluminum concentration after the heat treatment was generally low compared to that before the heat treatment (4.9 wt.%) and it became especially low when the temperature of the thermal treatment was high. Further, under the same thermal treatment conditions, the smaller the grain diameter was, the lower the aluminum concentration became.

[Calculation of Aluminum Concentration inside Grains]

Next, the aluminum concentration inside the grain is obtained on the following assumption. 5 wt.% of aluminum is uniformly included inside the grains of the porous metallic substrate before the thermal treatment. When it is thermally treated, aluminum inside the grains diffuses on the surfaces thereby forming an oxidation coating with several μm thickness, which includes aluminum by high concentration, on the surface of the substrate.

The thickness of the oxidation coating has been observed using SEM and the aluminum concentration using EDX. Thus, the quantity of aluminum included in the surface oxidation coating Is obtained from the thickness of the oxidation coating and the aluminum concentration. The aluminum concentration inside the grains after the thermal treatment can be estimated through subtracting the quantity of aluminum included in the surface oxidation coating from the quantity of aluminum present inside the grains before the thermal treatment, and dividing it by the volume of the grains.

The thickness of the surface oxidation coating of the sample B-1 which was obtained by performing the thermal treatment on the porous metallic substrate B at 1000 °C for eight hours was 1.5 μm and the aluminum concentration in the surface oxidation coating was 55 %,

Moreover, the thickness of the surface oxidation coating of the sample B-2 which was obtained by performing the thermal treatment on the porous metallic substrate B at 1100 °C for eight hours was 2.5 μm and the aluminum concentration in the surface oxidation coating was 60 %. In either case, the thickness of the surface oxidation coating was not influenced by the grain diameter.

Fig. 13 shows the values of the aluminum concentration inside the grains which were calculated from the above-described values. The calculated values are consistent with the measured results , so that it can be considered the calculation of aluminum concentration by this model is appropriate.

[Derivation of Optimum Aluminum Content]

From the above-described results, it is found that the inside aluminum concentration decreases since the surface area against the grain volume becomes large as the diameter of the grains constituting the porous metallic substrate becomes smaller. When the aluminum concentration decreases, it becomes impossible to maintain the sufficient aluminum concentration in the surface oxidation coating, reaching an abnormal oxidation state where the protective coating does not function as it is. Therefore, it is understood that it is necessary to increase the aluminum content in the alloy used for the porous metallic substrate when the porous metallic substrate is formed with small grains.

As described in the Embodiment 5, it is necessary to reduce the grain diameter and increase the specific surface area in order to sufficiently maintain the effective contact area between the porous metallic substrate and the electrode. Considering that several μm thick oxidation coating is formed on the grain surface, an appropriate range of the mean grain diameter may about 10 to 50 μm. Further, as found in the Embodiment 1, it is desirable to maintain the aluminum concentration of about 40 wt.% in the surface oxidation coating.

The aluminum content in the porous metallic substrate, which is necessary for maintaining the aluminum concentration of 0 wt.% or more inside the grain with the size of 10 to 50 μm, was derived using the above- described calculation process on the assumption that the thickness of the surface oxidation coating was 2 μm, the aluminum concentration in the surface oxidation coating was 40 wt.%

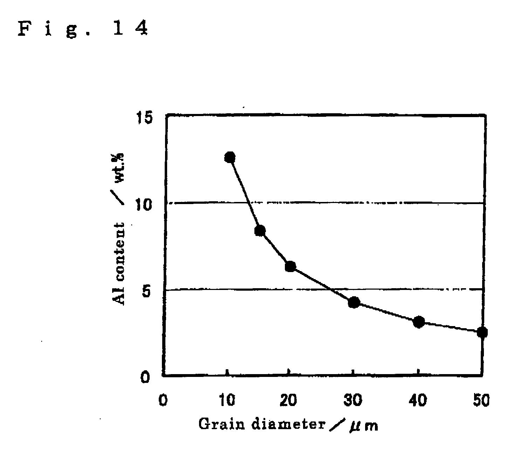

Fig. 14 shows the results. From the results, it has been found that the aluminum content of 2.5 wt.% or more is necessary when the porous metallic substrate is formed of the grains with 50 μm grain diameter, 6.3 wt % or more is necessary when formed with the grains with 20 μm grain diameter, and 12.6 wt.% or more is necessary when formed with the grains with 10 μm grain diameter.

Inversely, there faces no lack of aluminum inside the grains constituting the porous metallic substrate as long as the conditions are satisfied and the sufficient aluminum concentration can be maintained in the surface oxidation coating, Therefore, it is considered that such porous metallic substrate can maintain excellent oxidation resistance and enables to obtain the heat resistance of close to 1250 °C which is the catalog value of the heat resistant temperature of HRE®.

Embodiment 7

[Manufacture of Unit Cell]

Electrolyte slurry was prepared by the following method.

<Preparation of Slurry Solvent

A slurry solvent was prepared by mixing ethanol, terpineol, ethylcellulose, anti-foam agent, and dispersing agent by the weight percentages of 56: 37: 6.8: 0.1: 0.1,

<Preparation of Electrolyte Slurry>

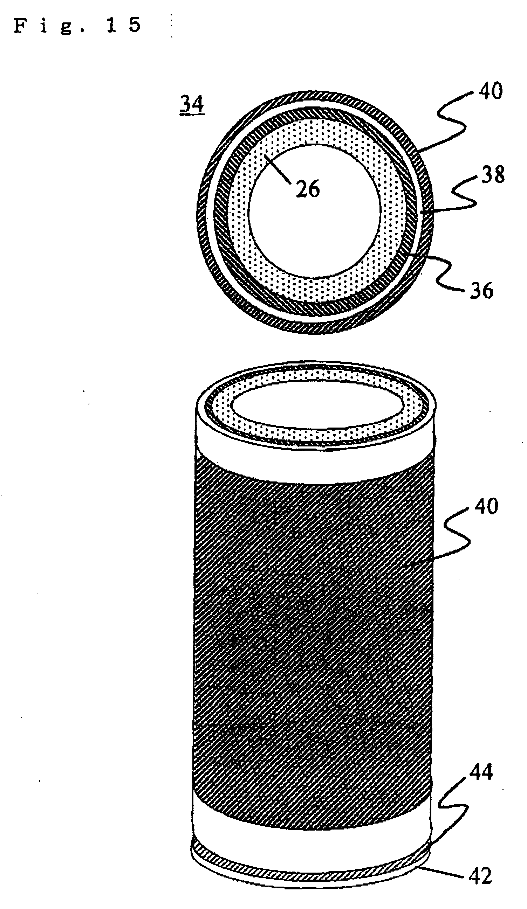

Electrolyte slurry was prepared by mixing YSZ grain with the mean grain diameter of 0.5 μm, the above-described slurry solvent and ethanol by the weight percentages of 20 : 50: 30.
Then, a cell 34 as shown in Fig. 15 was manufactured by the following method using the electrode slurry prepared by the method described in the "Manufacture of Electrode" and the above-described electrolyte slurry,

<Manufacture of Unit Cell>

The oxidizer electrode slurry was applied on the surface by a method (dip method) in which the porous metallic substrate A was dipped in the oxidizer electrode slurry and pulled out. It was dried at about 60 °C and then thermally treated at 1000 °C in the air for two hours.
The extent of permeation of slurry into the inside of the porous metallic substrate can be controlled through adjusting the viscosity of the slurry. In the Embodiment, it was about 50 μm. Further, the thickness of the oxidizer electrode 36 was about 50 μm.
Then, the electrolyte slurry was applied on the oxidizer electrode 36 by the same dip method. It was dried at about 60 °C and then thermally treated at 1000 °C in the air for two hours. The thickness of an electrolytic layer 38 was about 20 μm.
Further, the electrolyte slurry was applied on the electrolytic layer 38 by the same dip method. It was dried at about 60 °C and then thermally treated at 1000 °C in the air for two hours. The thickness of a fuel electrode 40 was about 50 μm.

[Cell Property Test and the Results]

One end of the porous metallic substrate 26 was sealed by a cover material member 42 which was a dense circular plate (diameter of 20 mm $\times$ thickness of 2 mm) made of the same material (HRE5®) as that of the porous metallic substrate 26 through thermocompression bonding with a metal ring 44 therebetween.
The metal ring 44 bonds the above-described cover member 42 to the porous metallic substrate 26 and, at the same time, functions as a seal member for preventing gas from leaking from the gap. The thermocompression bonding is achieved spontaneously in the course of increasing the cell temperature under a load as high as the operation temperature. The metal ring 44 was used in the present embodiment, however, the porous metallic substrate 26 and the cover member 42 may be also welded.
After increasing the unit cell temperature as high as the operation temperature (700 °C) in an electric furnace, hydrogen was introduced to the fuel electrode side and air to the oxidizer electrode side and the voltage-current property was measured. Collecting current for measuring the cell property was performed using a platinum wire.

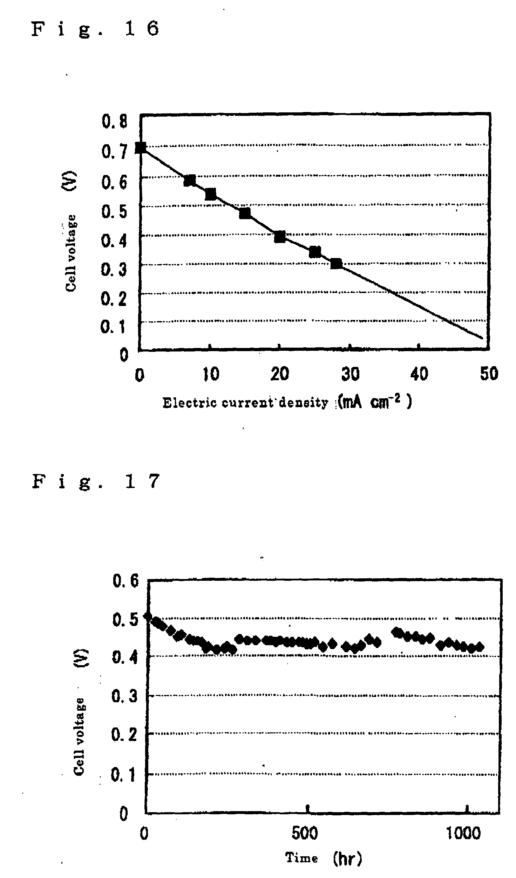

Fig. 16 and Fig. 17 show the cell property. A stable cell property was observed at 700 °C, and electricity generation continued for 1000 hours under 10 mA/cm$^2$.
In the embodiment, the oxidizer electrode 36, the electrolytic layer 38 and the fuel electrode 40 were arranged on the porous metallic substrate 26 in this order. The merits of resistance reduction according to the present invention may be brought at the greatest by using the porous metallic substrate 26 for the oxidizer electrode 36 side. However, the fuel electrode 40, the electrolytic layer 38 and the oxidizer electrode 36 may be arranged on the porous metallic substrate 26 in this order. Also, it is advantageous in terms of thermal impact resistance when the cell has a cylindrical structure. However, the present invention is also applicable to a flat-plate type cell.
In the embodiment, lanthanum manganite oxide was used as the material for the oxidizer electrode 36. However, other oxides which exhibit high electrode activation characteristic at low temperatures, such as lanthanum cobaltite oxide, lanthanum iron cobalt oxide and the like, maybe used as the material for the oxidizer electrode 36.
Also, stabilized zirconia to which 8 mol% of yttria was added was used as the material for the electrolytic layer 38, however, it is not limited to this. Others that can be used are stabilized zirconia to which 3 mol% or 10 mol% of yttria is added, zirconia to which scandia is added, samaria-doped ceria, lanthan gallate and the like.

Further, the mixture of nickel and YSZ was used as the material for the fuel electrode 40. However, it is possible to use iron, copper or an alloy of these instead of nickel and also possible to use zirconia to which scandia is added or ceria oxide instead of YSZ. In addition, in order to improve the property in the case of using hydrocarbon fuel, a very small quantity of noble metals such as platinum, gold, silver, palladium and the like may be dispersed.

In the embodiments 1 to 7, iron-based ferritic stainless steel were used. However, the present invention is applicable to the case of using nickel-based alloy or cobalt-based alloy as long as it is a material in which a protective oxidation coating containing a large quantity of aluminum can be formed on the surface.

As the alloy material which is applicable for the porous metallic substrate 26 of the present invention, it is desirable to use the one containing aluminum of about several wt.% or more, in which a protective coating containing aluminum is formed on the surface. However, it is also possible to disperse aluminum over the surface of a metal material, which does not contain aluminum, by cementation for alloying it with aluminum.

Embodiment 8

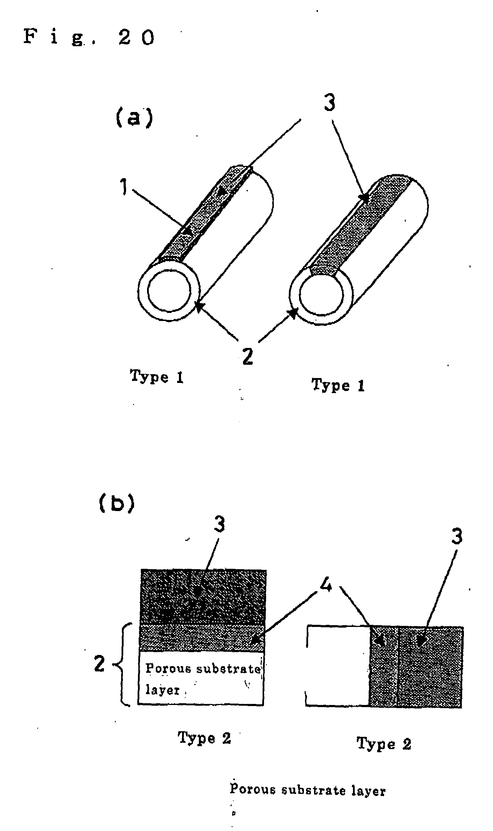

Substrate tubes of type 1 and type 2 shown in Fig. 20 were fabricated using HRE5® as the material for the porous metallic and ZMG232® as the interconnector material. A unit cell was fabricated by forming electrodes and an electrolytic layer on the substrate tubes by the following method.

Preparation of Slurry Solvent

A slurry solvent was prepared by mixing ethanol, terpineol, ethylcellulose, anti-foam agent, and dispersing agent by the mass ratio of 56: 37 : 6,8: 0.1: 0.1.

Preparation of Fuel Electrode Slurry

A fuel electrode slurry was prepared by mixing grain of a mixture, which is obtained by mixing nickel oxide grain with the mean grain diameter of 3 $\mu$m and grain of stable zirconia to which 8 mol% of yttria is added (YSZ) with the mean grain diameter of 0.5 $\mu$m by the mass ratio of 9: 1, and the above-described slurry solvent by the mass ratio of 1: 1.

Preparation of Air Electrode Slurry

An air electrode slurry was prepared by mixing $La_{0.85}Sr_{0.15}MnO_3$ grain with the mean grain diameter of 2 $\mu$m and the above-described slurry solvent by the mass ratio of 3 : 7.

Preparation of Electrolyte Slurry

Used was an electrolyte slurry prepared by mixing grain of stable zirconia to which 8 mol% of yttria was added (YSZ) with the mean grain diameter of 0.5 $\mu$m, the above-described slurry solvent and ethanol by the mass ratio of 20: 50: 30. Further, sintering under the thermal treatment at about 1100 °C is insufficient, so that a mixture of zirconia sol (ZSL-20N, a product of Newtex Inc.,) on the market and a prescribed quantity of yttrium nitrite was used afterwards in order to perform sealing.

Fabrication of Electrodes and Electrolytic Layer

The methods of forming the air electrode, the electrolytic layer and the fuel electrode on the porous substrate tube are as follows.

First, the air electrode slurry was applied on the surface thereof by a method (dip method) in which the porous substrate tube was dipped in the air electrode slurry and pulled out. Thereafter it was dried at about 60 °C and thermally treated at 1100 °C. The thickness of application of slurry can be controlled through adjusting the viscosity of the slurry and the application frequency. If it is too thick, there may be cracks or exfoliation generated. Therefore, it is desirable to be about 100 $\mu$m or less, and to be 50 $\mu$m or less if possible. In the test carried out at this time, it was about 50 $\mu$m.

Next, the electrolyte slurry was applied thereon by the same dip method. It was dried at about 60 °C and then thermally treated at 1100 °C. Then, zirconia sol, which can be densely sintered at low temperatures, was permeated, dried, and thermally treated. This process was repeated for performing sealing.

It is considered to be necessary to have about 5 $\mu$m or more in the thickness of the electrolytic layer in regards to the strength. However, in the case of a cell which operates at low temperatures, the resistance inside the cell largely increases by an increase in the thickness of the electrolytic layer. Thus, when YSZ is used for the electrolyte and the cell is operated at 800 °C or less, the thickness is desirable to be about 30 $\mu$m or less. The thickness of the electrolyte in the cell fabricated in the embodiment was about 20 $\mu$m.

In the embodiment, stabilized zirconia to which 8 mol% of yttria was added was used as the material for the electrolyte, however, it is not limited to this. Others that can be used are stabilized zirconia to which 3 mol% or 10 mol% of yttria was added, zirconia to which scandia is added, samaria-doped ceria, lanthanum gallate and the like.

The one with 3 mol% yttria additive has relatively low ion conductivity but a high strength , so that it can be preferably used when the strength is an issue. The one with scandia additive is expensive but has high oxygen ion conductivity , so that it can be preferably used when the oxygen ion conductivity is an issue.

After fabricating the electrolytic layer as described above, the fuel slurry was applied thereon by the same dip method. It was dried at about 60 °C and then thermally treated at 1100 °C. The thickness of the fuel electrode was about 50 $\mu$m.

Method of Testing Cell used for the Fabricated Unit Cell

One end of the porous substrate tube was sealed by a cover material member which was a dense circular plate (diameter of 20 mm $\phi \times$ thickness of 1 mm) made of the same material as that of the porous substrate tube through thermocompression bonding it with a metal ring therebetween. The metal ring bonds the above-described cover member to the porous substrate tube and, at the same time, functions as a seal member for preventing gas from leaking from the gap. The thermocompression bonding is achieved spontaneously in the course of increasing the cell temperature under a load as high as the operation temperature. The metal ring was used in the embodiment, however, the cover member and the porous metallic substrate may be welded.

After increasing the unit cell temperature as high as the operation temperature (700 °C) in an electric furnace, hydrogen was introduced to the fuel electrode side and air to the air electrode side and the voltage-current property was measured. The cell operation temperature was 800 °C.

Electricity for measuring the cell property was collected from the interconnecter layer and the fuel electrode using a platinum wire and a platinum net.

Condition for Testing Cell:

Electrode effective area : 1 cm$^2$
Hydrogen flow rate : 0.1 lit./min
Air flow rate: 0.5 lit./min

From the results of the cell test, the cell voltage of 0.5 V or more was obtained at the current density of 0.1 A/cm$^2$.

In the solid oxide fuel cell according to claim 1 of the present invention, a cell has an oxidizer electrode and a fuel electrode being arranged with a solid electrolytic layer therebetween is formed on a porous metallic substrate, in which the porous metallic substrate is made of metal in which a coating including aluminum is formed on a surface of the metal constituting the porous metallic substrate. Therefore, it is possible to obtain an excellent oxidation resistance. Thereby, it enables to perform the steps of fabricating the cell in the oxidation atmosphere at high temperatures at 1000 °C or more.

Further, it is possible to reduce the material cost since less expensive metal material is used for the porous substrate compared to the conventional art using ceramics for the porous substrate and, at the same time, enables to provide a cell with an excellent long-term stability, which exhibits low inside resistance and high power density.

Further, the porous metallic substrate has high strength and high thermal conductivity , so that the temperature distributions inside the cell can be made uniform and the thermal impact resistance is expected to be improved remarkably. Thus, it enables to provide a cell with excellent durability against a sudden change in a load and an increase/decrease in the temperatures of the cell.

In the solid oxide fuel cell according to claim 2 of the present invention, a cell has an oxidizer electrode and a fuel electrode being arranged with a solid electrolytic layer therebetween is formed in such a manner that the oxidizer electrode faces a porous metallic substrate, in which the porous metallic substrate is made of metal in which a coating, including aluminum and a high-conductive oxide which is generated by a solid phase reaction between an element included in the metal constituting the porous metallic substrate and an element included in the oxidizer electrode, is formed on a surface of the metal constituting the porous metallic substrate. Thus, the contact resistance between the porous metallic substrate and the oxidizer electrode can be decreased. Especially, the contact resistance in the low temperature range is decreased so that it enables to obtain a solid oxide fuel cell which can be operated in a wide temperature range,

In the solid oxide fuel cell according to claim 3 of the present invention described in claim 1 or 2, the coating formed on the surface of the metal constituting the porous metallic substrate includes 20 to 70 wt.% of aluminum. Therefore, it is possible to suppress oxidation progress on the porous metallic substrate remarkably in the steps of fabricating the cell and when the cell is in operation. Also, the contact resistance between the porous metallic substrate and the electrodes can be decreased.

In the solid oxide fuel cell according to claim 4 of the present invention described in claim 1 or 2 or 3, a specific surface area of the porous metallic substrate is 0.01 to 1 $m^2$/g. Thus, the effective contact area with the electrodes can be increased so that the contact resistance can be decreased. At the same time, the oxidation resistance of the porous metallic substrate can be maintained.

In the solid oxide fuel cell according to claim 5 of the present invention described in claim 1 or 2 or 3 or 4, a mean grain diameter of metal grains constituting the porous metallic substrate is 10 to 50 $\mu$m. Therefore, it is possible to fabricate a porous metallic substrate having an ideal specific surface area.

In the solid oxide fuel cell according to claim 6 of the present invention described in claim 1 or 2 or 3 or 4 or 5, the porous metallic substrate is made of an alloy including 2.5 wt.% of aluminum or more. Thus, a sufficient quantity of aluminum can be supplied to the surface oxidation coating , so that a porous metallic substrate which maintains an excellent oxidation resistance can be obtained.

In the cylindrical solid oxide fuel cell according to claim 7 of the present invention, an electron conductive and gas impermeable interconnector layer is: formed in the longitudinal direction on a part of a porous substrate tube while an air electrode, a solid oxide electrolytic layer and a fuel electrode are formed in this order on the porous substrate tube on a part other than the part where the interconnector is formed, wherein the porous substrate tube is made of heat-resistant metal. Thus, the heat-resistant stainless steel and the like can be used, which is inexpensive, excellent in oxidation resistance and low in thermal expansion. Therefore, in addition to achieving a drastic reduction in the material cost, it achieves remarkable effects that the porous metallic substrate has high strength and high thermal conductivity , so that the temperature distributions inside the cell is made uniform and the thermal impact resistance is expected to be improved extremely. Thus, it enables to provide a cell with excellent durability and mass productivity, which can be stably operated without facing cracks and exfoliation in the electrolytic layer and the electrodes even in the case of a sudden change in a load and an increase/decrease in the temperatures of the cell.

In the cylindrical solid oxide fuel cell according to claim 8 of the present invention described in claim 7, the heat-resistant metal is ferritic stainless steel includeing iron as a main component. Thus, it achieves the same effects as those of the cylindrical solid oxide fuel cell according to claim 7 of the present invention as described. Further, it is a material which is high in oxidation resistance and low in the thermal expansion coefficient to be about $12 \times 10^{-6}$K $^{-1}$, which is similar to thermal expansion coefficient of the electrodes and electrolyte. Therefore, there is a small stress generated by difference of the thermal expansion coefficient between the porous metallic substrate, the electrodes and the electrolyte. Thereby, it enables to achieve more remarkable effects such as excellent durability and stable operation without facing crack and exfoliation in the electrolytic layer and the electrodes in case of an increase/decrease in the temperatures of the cell.

In the cylindrical solid oxide fuel cell according to claim 9 of the invention described in claim 7 or 8, the interconnector layer is made of metal and an middle layer of non-oxidized metal with small porosity is formed in the vicinity of joining interface between the porous substrate tube and the interconnector layer. Thus, it achieves the same effects as those of the cylindrical solid oxide fuel cell according to claim 7 of the present invention as described. Further, the interconnector layer made of a metal is excellent in electron conductivity and gas impermeability. Also, bonding and electric connection between the porous substrate tube and the interconnector layer becomes excellent due to the presence of the interlayer.

In the cylindrical solid oxide fuel cell according to claim 10 of the invention described in claim 9, the interconnector layer is made of heat-resistant metal including iron or nickel as a main component and an outer surface thereof has electron conductivity. Thus, it achieves the same effects as those of the cylindrical solid oxide fuel cell according to claim 3 of the present invention as described. Further, the interconnector layer, which is made of a heat-resistant metal containing iron or nickel as the main component, such as Fe-Cr based stainless steel or Ni-Cr based alloy is highly stable in the oxidation atmosphere on the air electrode side and in the reducing atmosphere on the fuel electrode side, Also, the oxide layer generated on the surface Is highly conductive , so that it enables to easily lead the electricity from the interconnector layer.

**Claims**

1. A solid oxide fuel cell, in which a cell having an oxidizer electrode and a fuel electrode being arranged with a solid electrolytic layer therebetween is formed on a porous metallic substrate, wherein
   said porous metallic substrate is made of metal in which a coating includeing aluminum is formed on a surface of said metal constituting said porous metallic substrate.

2. A solid oxide fuel cell, in which a cell having an oxidizer electrode and a fuel electrode being arranged with a solid electrolytic layer therebetween is formed in such a manner that said oxidizer electrode faces a porous metallic substrate, wherein
   said porous metallic substrate is made of metal in which a coating, including aluminum and a high-conductive oxide which is generated by a solid phase reaction between an element included in said metal constituting said porous metallic substrate and an element included in said oxidizer electrode, is formed on a surface of said metal constituting said porous metallic substrate.

3. The solid oxide fuel cell according to claim 1 or 2, wherein said coating formed on the surface of said metal constituting said porous metallic substrate includes 20to70 wt.% of aluminum.

4. , The solid oxide fuel cell according to any one of claims 1 to 3, wherein a specific surface area of said porous metallic substrate is 0.01to1 $m^2$/g.

5. The solid oxide fuel cell according to any one of claims 1 to 4, wherein a mean grain diameter of metal grains constituting said porous metallic substrate is 10to50 $\mu$m.

6. The solid oxide fuel cell according to any one of claims 1 to 5, wherein said porous metallic substrate is made of an alloy including 2.5 wt.% of aluminum or more.

7. The solid oxide fuel cell according to claim 1, in which an electron conductive and gas impermeable interconnector layer is formed in the longitudinal direction on a part of a porous substrate tube while an air electrode, a solid oxide electrolytic layer and a fuel electrode are formed in this order on said porous substrate tube on a part other than the part where said interconnector is formed, wherein said porous substrate tube is made of heat-resistant metal.

8. The solid oxide fuel cell according to claim 7, wherein said heat-resistant metal is ferritic stainless steel including iron as a main component.

9. The solid oxide fuel cell according to claim 7 or 8, wherein said interconnector layer is made of metal and an middle layer of non-oxidized metal with small porosity is formed in the vicinity of joining interface between said porous substrate tube and said interconnector layer.

10. The solid oxide fuel cell according to claim 9, wherein said interconnector layer is made of heat-resistant metal including iron or nickel as a main component and an outer surface thereby has electron conductivity.

Fig. 1

Protective coating
including alumina

16

10

12

Fig. 2

Oxide including
iron and chromic

16

10

14

F i g . 3

F i g . 4

F i g. 5

F i g. 6

Fig. 7

Permeation depth

18

10

26

F i g . 8

F i g . 9

Fig. 10

Fig. 11

Fig. 12

Fig. 13

Fig. 14

# Fig. 15

Fig. 16

Fig. 17

Fig. 18

34

図19

40

38

36

26

Fig. 19

40

38

36

26

10

16

F i g . 2 0

(a)

Type 1          Type 1

(b)

Type 2          Type 2

Porous substrate layer

Fig. 21

61

65

62

Fuel gas

Air

63

64

Fig. 22

65

67

64

63

62

66

Fig. 23

(a)

68

63

Air

64

22

62

Fuel gas

(b)

22    64    68    62    63